(19) Europäisches Patentamt
European Patent Office
Office européen des brevets

(11) **EP 2 932 059 B1**

(12) **FASCICULE DE BREVET EUROPEEN**

(45) Date de publication et mention
de la délivrance du brevet:
**18.04.2018 Bulletin 2018/16**

(21) Numéro de dépôt: **13792620.0**

(22) Date de dépôt: **07.11.2013**

(51) Int Cl.:
*F01N 11/00* *(2006.01)*    *F01N 3/08* *(2006.01)*

(86) Numéro de dépôt international:
**PCT/EP2013/073229**

(87) Numéro de publication internationale:
**WO 2014/090485 (19.06.2014 Gazette 2014/25)**

(54) **PROCEDE DE DIAGNOSTIC D'UN PIEGE A OXYDES D'AZOTE**

VERFAHREN ZUR DIAGNOSE EINER STICKOXIDFALLE

METHOD FOR DIAGNOSING A NITROGEN OXIDE TRAP

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **11.12.2012 FR 1261853**

(43) Date de publication de la demande:
**21.10.2015 Bulletin 2015/43**

(73) Titulaire: **Renault S.A.S.**
**92100 Boulogne-Billancourt (FR)**

(72) Inventeurs:
• **CHANZY, Romain**
**F-75116 Paris (FR)**
• **SELLAMI, Ali**
**75012 Paris (FR)**
• **ANCKAERT, Alexis**
**F-78220 Viroflay (FR)**

(56) Documents cités:
**EP-A1- 1 672 195        EP-A2- 1 460 246
DE-A1-102005 005 664    FR-A1- 2 916 017
FR-A1- 2 940 356         GB-A- 2 353 737**

EP 2 932 059 B1

**Description**

DOMAINE TECHNIQUE DE L'INVENTION

L'invention concerne un procédé de diagnostic de l'état de fonctionnement d'un piège à oxydes d'azote. Elle trouve une application avantageuse sous la forme d'un diagnostic embarqué dans un véhicule automobile équipé d'un moteur diesel associé à un piège à oxydes d'azotes, plus particulièrement un piège couplé à un filtre à particules.

ETAT DE LA TECHNIQUE

De nombreux moteurs modernes à combustion interne sont équipés d'un piège à oxydes d'azote ($NO_x$). En particulier, les moteurs diesel de véhicules automobiles, qui fonctionnent en mélange pauvre, c'est-à-dire dont la combustion s'effectue avec un excès d'oxygène par rapport à la stoechiométrie, émettent beaucoup de $NO_x$ et doivent avoir recours à un tel piège, afin de respecter les normes légales limitant les émissions de polluants, par exemple la norme européenne actuelle dite « euro6 ».

De manière connue, un piège à oxydes d'azote peut être placé dans la ligne d'échappement d'un véhicule et fonctionner de manière discontinue, selon deux modes distincts.

Pendant le fonctionnement habituel du moteur en mélange pauvre, c'est-à-dire avec un excès d'oxygène par rapport à la stoechiométrie, le piège retient une partie des molécules de $NO_x$ émises par le moteur sur différents compartiments catalytiques de stockage, le reste étant rejeté dans l'atmosphère après avoir traversé le piège. Le pourcentage de molécules de $NO_x$ du moteur qui est retenu par le piège est appelé efficacité de stockage.

Quand la masse de $NO_x$ stockée dans le piège atteint un seuil prédéterminé en fonction de la capacité maximale de stockage, un basculement provoqué du fonctionnement du moteur en mélange riche, c'est-à-dire avec un défaut d'oxygène par rapport à la stoechiométrie, permet de régénérer le piège. La phase de régénération consiste à purger le piège des $NO_x$ accumulés lors de la phase de fonctionnement en mélange pauvre. Au cours de cette phase, des réducteurs (hydrocarbures imbrûlés HC et monoxyde de carbone CO) provenant du moteur passent dans le piège et réduisent les molécules de $NO_x$ en molécules d'azote $N_2$ et de dioxyde de carbone $CO_2$.

Sous l'effet du vieillissement, et parfois d'événements accidentels tels que des chocs thermiques ou mécaniques, l'efficacité de stockage d'un piège à oxydes d'azote diminue, à cause de la baisse du nombre de compartiments catalytiques disponibles dans le piège pour stocker les molécules de $NO_x$.

Pour s'assurer que les rejets dans l'atmosphère des gaz d'échappement d'un véhicule automobile sont en permanence conformes aux normes légales, il est courant de surveiller l'état de fonctionnement de son piège à oxydes d'azote, c'est-à-dire de tester son efficacité de stockage, grâce à un diagnostic embarqué.

On connaît plusieurs procédés qui visent à surveiller l'état de fonctionnement d'un piège à oxydes d'azote.

Par exemple, la publication FR 2 916 017-A1 divulgue un procédé de surveillance dans lequel on calcule un rapport entre la masse de réducteurs utilisée pendant la régénération en mode riche d'un piège à oxydes d'azote, divisée par la masse de $NO_x$ stockée en mode pauvre dans le piège, et on compare ce rapport avec un seuil afin de distinguer un piège en bon état d'un piège défaillant. Un tel procédé n'est pas satisfaisant, car la détermination de la masse de $NO_x$ est imprécise, à cause de l'incapacité des modèles existants à déterminer de manière fiable les débits de $NO_x$ lors des conditions de fonctionnement transitoires du moteur.

D'autres procédés s'affranchissent de l'imprécision liée à la détermination de la masse de $NO_x$ stockée dans le piège pendant le fonctionnement du moteur en mode pauvre. Par exemple, la publication FR 2 940 356-A1 divulgue un procédé de diagnostic dans lequel on détermine un critère de diagnostic égal au débit moyen de réducteurs utilisé pendant la régénération en mode riche d'un piège à oxydes d'azote, et on compare ce rapport avec un seuil.

Bien que permettant de détecter correctement des pièges qui ont pratiquement perdu toute leur efficacité de stockage, ce procédé n'est pas assez précis au regard de la sévérité des nouvelles normes légales, notamment les normes OBD (de l'acronyme anglais : On Board Diagnostic) et la réglementation IUPR (de l'acronyme anglais : In Use Performance Ratio), qui nécessitent de diagnostiquer dans diverses conditions de roulage des pièges à oxyde d'azote ayant une efficacité de stockage résiduelle encore élevée.

La demanderesse a constaté par une campagne d'essais statistiques qu'un tel procédé ne permet pas de séparer distinctement les populations de pièges défaillants et non-défaillants et entraîne des risques élevés de non-détection (c'est-à-dire : un piège défaillant est considéré comme bon par le diagnostic) et de fausse détection (c'est-à-dire : un piège bon est déclaré défaillant par le diagnostic).

Ce manque de précision se fait particulièrement sentir lorsque les deux sondes à oxygène servant à mesurer la quantité de réducteurs en amont et en aval du piège ne sont pas implantées immédiatement à l'entrée et à la sortie du piège.

Un tel cas de figure se présente quand un moteur est associé à une ligne d'échappement comprenant un dispositif de traitement des gaz d'échappement qui regroupe dans une même enveloppe métallique (connue généralement sous la dénomination anglaise « canning » ) un piège à oxydes d'azote et un système additionnel de traitement des gaz d'échappement, par exemple un filtre à particules logé dans le canning juste en aval du piège (dans le sens d'écoulement des gaz d'échappement).

Quand le canning, généralement de forme cylindrique, a un diamètre important, typiquement supérieur à 15 cm, il n'est pas possible d'implanter immédiatement à l'arrière du piège, c'est-à-dire entre la sortie du piège et l'entrée du filtre à particules, la sonde à oxygène servant à estimer la quantité de réducteurs en aval du piège. Pour la précision de mesure, cette sonde est implantée à la sortie du canning, c'est-à-dire en aval du filtre à particules. La demanderesse a mis en évidence que la distance dont la sonde est séparée du piège, c'est-à-dire la distance qui correspond à la longueur du filtre à particules, fausse le critère de diagnostic.

D'autre part, la demanderesse a mis en évidence un manque de reproductibilité d'un tel diagnostic, dû à la sensibilité du critère à la température. Plus précisément, des pièges peuvent être déclarés tantôt défaillants, tantôt non-défaillants, selon que la température du piège à oxydes d'azote est plus ou moins élevée pendant la phase de régénération. Cette température influence l'efficacité de réduction du piège, c'est-à-dire le rendement de la réaction de réduction des $NO_x$ par les molécules réductrices (monoxyde de carbone et hydrocarbures imbrûlés) provenant du moteur en mode riche. En fonction de la température du piège, il faut plus ou moins de quantité de réducteurs à un même piège pour purger la même quantité de $NO_x$ stockée en phase pauvre.

RESUME DE L'INVENTION

L'invention propose de remédier au manque de précision et aux risques de diagnostics erronés des procédés de diagnostics connus dans lesquels on détermine un critère de diagnostic à partir de la masse de réducteurs consommée pendant la phase de régénération du piège.

Elle propose pour cela un procédé de diagnostic d'un piège à oxydes d'azote apte à décomposer, pendant une phase de régénération, les oxydes d'azote stockés dans le piège par réaction avec des réducteurs, comprenant :

- une étape de détermination d'un critère de diagnostic dépendant de la masse de réducteurs consommée pendant la phase de régénération ;
- une étape de comparaison du critère de diagnostic à un seuil de défaillance en dessous duquel on détermine que le piège est défaillant ; et
- une étape d'émission d'un signal indiquant l'état de défaillance du piège,

caractérisé en ce qu'on détermine ledit critère de diagnostic en fonction d'un ensemble de paramètres comprenant au moins la masse de réducteurs consommée pendant la phase de régénération, la durée de la phase de régénération, et une valeur d'efficacité de réduction du piège pendant la phase de régénération.

BREVE DESCRIPTION DES FIGURES

D'autres caractéristiques et avantages de l'invention apparaîtront à la lecture d'un mode de réalisation non limitatif de celle-ci, en se reportant aux dessins annexés sur lesquels :

- la figure 1 illustre un dispositif de diagnostic d'un piège à oxydes d'azote ; et
- la figure 2 est un organigramme des étapes d'un procédé de diagnostic d'un piège à oxydes d'azote conforme à l'invention.

DESCRIPTION DETAILLEE DES FIGURES

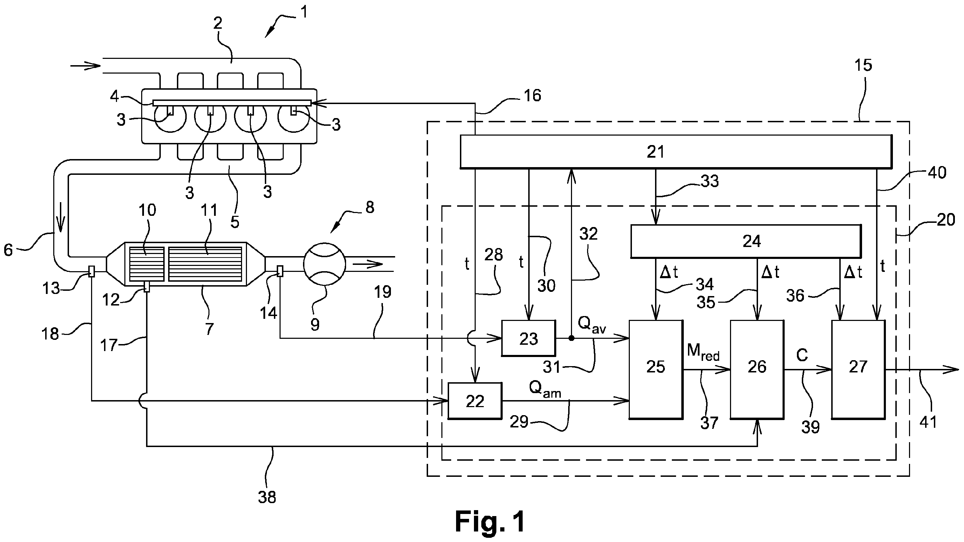

Sur la figure 1, on a représenté un moteur 1 à combustion interne, par exemple un moteur diesel de véhicule automobile, pourvu d'un dispositif de diagnostic. Le moteur 1 est alimenté en air par un collecteur d'admission 2 et en carburant, par exemple du gazole, par une pluralité d'injecteurs 3 montés sur une rampe commune 4 d'alimentation en carburant.

Le moteur 1 est équipé d'un circuit d'échappement des gaz brûlés, comprenant un collecteur d'échappement 5, une conduite d'échappement 6, un dispositif de traitement 7 des émissions polluantes du moteur 1 et un pot d'échappement 8 sur lequel est monté un débitmètre 9, par lequel les gaz d'échappement sont évacués dans l'atmosphère.

Le moteur peut être du type suralimenté et/ou associé à au moins un circuit de recirculation des gaz d'échappement.

Le dispositif de traitement 7 des émissions polluantes se présente sous la forme d'une enveloppe métallique (ou « canning ») de forme sensiblement cylindrique terminée à ses deux extrémités par deux cônes de liaison respectivement avec la conduite d'échappement 6 et le pot d'échappement 8.

Dans cette enveloppe métallique sont logés deux systèmes anti-pollution ayant des fonctions distinctes : d'une part, un piège à oxydes d'azote 10, et d'autre part un filtre à particules 11. Ici, le piège à oxydes d'azote 10 est monté en amont du filtre à particules 11, dans le sens de circulation des gaz d'échappement figuré par les flèches représentées sur la figure 1. En d'autres termes, les gaz d'échappement pénètrent successivement dans le piège à oxydes d'azote 10, puis dans le filtre à particules 11, avant d'être rejetés dans l'atmosphère.

En variante, le piège 10 peut être monté en aval du filtre à particules 11, et/ou le filtre à particules 10 peut être remplacé par un autre système anti-pollution 11 additionnel, par exemple un catalyseur d'oxydation.

Le piège à oxydes d'azote 10 stocke une partie des émissions de $NO_x$ du moteur 1 quand celui-ci fonctionne en mélange pauvre. Périodiquement, lorsqu'une phase de fonctionnement du moteur 1 en mélange riche (dite : phase de régénération) est déclenchée, le piège 10 réduit les $NO_x$ en molécules d'azote $N_2$ et de dioxyde de carbone $CO_2$ sous l'action de réducteurs, c'est-à-dire de molécules de monoxyde de carbone et d'hydrocarbures imbrûlés émises par le moteur 1.

De manière connue en soi, le filtre à particules 11 stocke les suies émises par le moteur 1 et se purge en les brûlant dans certaines conditions de fonctionnement spécifiques du moteur 1 (par exemple : élévation de température au dessus de 650°C et injection de carburant à l'échappement).

Il est avantageux d'associer dans un même canning, d'une part un piège à oxydes d'azote 10 en amont, et d'autre part un filtre à particules 11 en aval, car le filtre à particules 11 peut profiter d'une l'élévation de température due au fonctionnement du piège 10 pour faciliter l'atteinte de sa température de purge.

Le piège à oxydes d'azote 10 est associé à des moyens de détermination de sa température $\theta$, par exemple un capteur 12 de température. Le dispositif de traitement 7 est associé à son entrée et à sa sortie (dans le sens de circulation des gaz d'échappement) à une sonde à oxygène amont 13 et à une sonde à oxygène aval 14.

Une unité de commande électronique 15 est reliée au moteur 1 par une connexion 16, au capteur de température 12 par une connexion 17, à la sonde à oxygène amont 13 par une connexion 18 et à la sonde à oxygène aval 14 par une connexion 19.

L'unité de commande électronique 15 comprend également un dispositif de diagnostic embarqué 20 et un moyen de commande 21 de la phase de régénération du piège à oxydes d'azote 10. Le dispositif de diagnostic 20 comprend :

- un moyen de détermination 22 du débit massique de réducteurs (monoxyde de carbone et hydrocarbures imbrûlés) contenus dans les gaz d'échappement en amont $Q_{am}$ du piège 10 ;
- un moyen de détermination 23 du débit massique de réducteurs contenus dans les gaz d'échappement en aval $Q_{av}$ du piège 10 ;
- un moyen d'estimation 24 de la durée $\Delta t$ de la phase de régénération ;
- un moyen d'estimation 25 de la masse de réducteurs $M_{red}$ consommée pendant la phase de régénération ;
- un moyen de détermination 26 d'un critère de diagnostic C ; et
- un moyen de détermination 27 de l'état de défaillance du piège à oxydes d'azote 10.

Le moyen de détermination 22 du débit massique $Q_{am}$ de réducteurs mesuré en amont du piège 10 est relié en entrée :

- par la connexion 18, à la sonde à oxygène amont 13 ; et
- par une connexion 28, au moyen de commande 21 de la phase de régénération.

Il est également relié en entrée au débitmètre 9 par une connexion non représentée. En sortie, il est relié par une connexion 29 au moyen d'estimation 25 de la masse de réducteurs $M_{red}$ consommée pendant la phase de régénération.

Le moyen de détermination 23 du débit massique de réducteurs mesuré en aval $Q_{av}$ du piège 10 est relié en entrée :

- par la connexion 19, à la sonde à oxygène aval 14 ; et
- par une connexion 30, au moyen de commande 21 de la phase de régénération.

Il est également relié en entrée au débitmètre 9 par une connexion non représentée. En sortie, il est relié par une connexion 31 au moyen d'estimation 25 de la masse de réducteurs $M_{red}$ consommée pendant la phase de régénération, et par une connexion 32 au moyen de commande 21 de la phase de régénération.

Le moyen d'estimation 24 de la durée $\Delta t$ de la phase de régénération est relié en entrée au moyen de commande 21 de la phase de régénération par une connexion 33. En sortie, il est relié :

- au moyen d'estimation 25 de la masse de réducteurs $M_{red}$ consommée pendant la phase de régénération, par une connexion 34 ;
- au moyen de détermination 26 du critère de diagnostic C, par une connexion 35 ; et
- au moyen de détermination 27 de l'état de défaillance du piège à oxydes d'azote 10.

En sortie, le moyen d'estimation 25 de la masse de réducteurs $M_{red}$ consommée pendant la phase de régénération est relié par une connexion 37 au moyen de détermination 26 du critère de diagnostic C.

En entrée, le moyen de détermination 26 du critère de diagnostic C est relié par une connexion 38 au capteur 12 de température $\theta$ du piège à oxydes d'azote 10. En sortie, il est relié au moyen de détermination 27 de l'état de défaillance du piège à oxydes d'azote 10 par une connexion 39.

En entrée, le moyen de détermination 27 de l'état de défaillance du piège à oxydes d'azote 10 est relié au moyen de commande 21 de la phase de régénération par une connexion 40. En sortie, il est relié par une connexion 41 à d'autres éléments (non représentés sur la figure 1) de l'unité de commande électronique 15 aptes à utiliser le résultat du diagnostic.

Le moyen de commande 21 de la phase de régénération émet un signal permettant de déclencher le calcul des débits massiques de réducteurs $Q_{am}$, $Q_{av}$ en amont et en aval du piège 10. Ces débits sont calculés respectivement par les équations suivantes :

$$(Eq.1) \qquad Q_{am} = Q_{ech} * R_{am}$$

$$(Eq.2) \qquad Q_{av} = Q_{ech} * R_{av}$$

,dans lesquelles :

- $Q_{ech}$ désigne le débit des gaz d'échappement, mesuré par le débitmètre 9 ;
- $R_{am}$ désigne la richesse des gaz d'échappement en amont du dispositif 7, mesurée par la sonde à oxygène amont 13 ; et
- $R_{av}$ désigne la richesse des gaz d'échappement en aval du dispositif 7, mesurée par la sonde à oxygène aval 14

Ce signal sert également de déclencheur à l'intégration temporelle des débits massiques $Q_{am}$ , $Q_{av}$ de réducteurs, dans le moyen d'estimation 25. La masse de réducteurs $M_{red}$ consommée dans le piège 10, c'est-à-dire qui participe à la réaction de réduction des molécules de $NO_x$ stockées dans le piège 10, est obtenue par l'équation suivante :

$$(Eq.3) \qquad M_{red} = \int_{\Delta t} (Q_{am} - Q_{av}) * dt$$

,dans laquelle $\Delta t$ désigne la durée de la phase de régénération pendant laquelle le calcul de l'intégrale est réalisé.

Le moyen de commande 21 de la phase de régénération reçoit le débit massique de réducteurs en aval $Q_{av}$ du dispositif 7. Lorsque cette valeur atteint un seuil prédéterminé, le moyen de commande 21 arrête la phase de régénération en stoppant l'émission du signal qui déclenche la phase de régénération, ce qui arrête l'intégration temporelle réalisée dans le moyen d'estimation 25 de la masse de réducteurs.

En d'autres termes, le moyen d'estimation 24 permet de déterminer la durée $\Delta t$ de la phase de régénération entre l'émission et la fin de l'émission du signal issu du moyen de commande 21.

Le moyen de détermination 26 du critère de diagnostic C reçoit la masse de réducteurs $M_{red}$, la durée $\Delta t$ de la phase de régénération et la température $\theta$ du piège à oxydes d'azote 10. Ces signaux permettent de calculer le critère de diagnostic C selon l'équation suivante :

$$(Eq.4) \qquad C = \varepsilon_{red} * f(\Delta t) * M_{red}$$

, dans laquelle

- $\varepsilon_{red}$ désigne l'efficacité de réduction du piège à oxydes d'azote pendant la phase de régénération ;
- $f(\Delta t)$ désigne une fonction f de la durée de régénération $\Delta t$
- $M_{red}$ désigne la masse de réducteurs calculée selon l'équation 3

L'efficacité de réduction $\varepsilon_{red}$, c'est-à-dire l'efficacité de la phase de régénération du piège à oxydes d'azote, est définie comme le rendement de la réaction chimique de réduction des molécules de $NO_x$ par le monoxyde de carbone et les hydrocarbures imbrûlés. Elle dépend de la température $\theta$ du piège à oxydes d'azote 10 pendant la phase de régénération.

Plus précisément, l'efficacité de réduction $\varepsilon_{red}$ est une fonction croissante de la température $\theta$ du piège jusqu'à une température optimale $\theta_{opt}$ où elle prend une valeur maximale, et au-delà de cette température optimale $\theta_{opt}$, elle est une fonction décroissante de la température $\theta$. La relation qui donne l'efficacité de réduction $\varepsilon_{red}$ en fonction de la température $\theta$ peut être établie par des essais préalables au banc moteur. Avantageusement, la relation suivant approximativement une loi parabolique, l'efficacité de réduction peut être calculée par l'équation suivante :

$$(Eq.5) \qquad \varepsilon_{red} = 1-a(1-\theta/\theta_{opt})^2$$

,dans laquelle :

- la lettre a désigne une constante calculée à partir des différents essais, par exemple par la méthode des moindres carrés ; et
- la température optimale $\theta_{opt}$ est déterminée par balayage de température. Cette température est d'environ 300°C et permet d'atteindre une efficacité de réduction $\varepsilon_{red}$ égale à 1.

La fonction f de la durée $\Delta t$ de la phase de régénération est calculée par l'équation suivante :

$$(Eq.6) \qquad f(\Delta t) = min(T_{min},\Delta t) \,/\, max(T_{max},\Delta t)$$

, dans laquelle

- $min(T_{min},\Delta t)$ désigne la plus petite valeur parmi une durée minimale prédéterminée $T_{min}$ et la durée de régénération $\Delta t$ ;
- $max(T_{max},\Delta t)$ désigne la plus grande valeur parmi une durée maximale prédéterminée $T_{max}$ et la durée de régénération $\Delta t$.

Avantageusement, la durée minimale $T_{min}$ est sensiblement égale à la durée de transvasement des gaz d'échappement dans le filtre à particules 11, c'est-à-dire à la durée que les gaz d'échappement mettent à traverser le filtre à particules 11, depuis la sortie du piège à oxydes d'azote 10. Dans l'équation 6, la prise en compte d'une telle durée minimale $T_{min}$ permet de corriger l'imprécision de l'estimation de la richesse à la sortie du piège à oxydes d'azote 10 réalisée par la sonde à oxygène aval 14. Par exemple, la durée minimale $T_{min}$ peut être mesurée par des essais préalables au banc moteur.

Avantageusement, la durée maximale $T_{max}$ est prédéterminée comme la durée maximale de la régénération au-delà de laquelle un piège à oxydes d'azote 10 est bon (c'est-à-dire : non défaillant). Lorsqu'un piège 10 est défaillant, la phase de régénération est plus courte. La durée maximale $T_{max}$ peut être déterminée au banc moteur de manière statistique à partir d'un échantillon de pièges défaillants et non-défaillants.

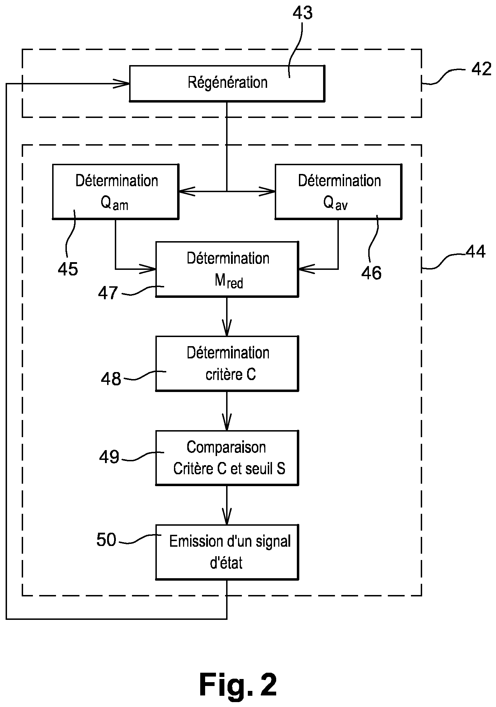

La figure 2 est un organigramme des étapes d'un procédé de diagnostic d'un piège à oxydes d'azote 10 selon l'invention.

Pendant le fonctionnement du moteur 1 en mélange pauvre, un procédé de commande 42 du moteur surveille l'accumulation de $NO_x$ dans le piège à oxydes d'azote 10. Lorsque le piège 10 atteint une valeur prédéterminée de stockage, qui peut être voisine de sa capacité maximale de stockage, le procédé de commande 42 déclenche une étape 43 de régénération du piège 10, qui consiste à modifier la teneur en réducteurs des gaz d'échappement en sortie du moteur, par un fonctionnement en mélange riche.

Le procédé de diagnostic 44 du piège à oxydes d'azote 10 peut alors être déclenché. Ce procédé 44 commence par une étape de détermination 45 du débit massique de réducteurs $Q_{am}$ en amont du piège 10, obtenu selon l'équation 1, simultanément avec une étape de détermination 46 du débit massique de réducteurs $Q_{av}$ en aval du piège 10, obtenu selon l'équation 2.

La détermination de ces débits se fait pendant toute la durée de la phase de régénération. Le procédé de diagnostic 44 se poursuit par une étape 47 de détermination de la masse de réducteurs $M_{red}$ utilisée pendant la phase de régénération. Cette masse est obtenue par intégration temporelle de l'écart des débits de réducteurs $Q_{am}, Q_{av}$ en amont et en aval du piège 10, entre l'instant de la réception du signal de démarrage de la phase de régénération et l'instant de l'arrêt de la réception de ce signal (selon l'équation 3).

Le procédé 44 se poursuit à une étape 48 de détermination d'un critère de diagnostic C. Pour cela, on calcule l'efficacité de réduction $\varepsilon_{red}$ à partir de la température $\theta$ du piège 10 en utilisant l'équation 5, la fonction f de la durée de la régénération $\Delta t$ par l'équation 6, puis on calcule le critère C comme le produit du résultat des équations 3, 5 et 6 (d'après l'équation 4).

Le procédé 44 se poursuit par une étape 49 de comparaison du critère de diagnostic C avec un seuil de défaillance S en dessous duquel on détermine que le piège à oxydes d'azote 10 est défaillant. Le seuil de défaillance S peut être déterminé au banc moteur par des essais statistiques.

Le procédé 44 se termine par une étape 50 au cours de laquelle un signal d'état est émis vers le procédé de commande 42 du moteur 1. Ce signal peut prendre deux états, soit un état défaillant, soit un état non défaillant. Lorsque l'état est défaillant, une alerte peut être remontée au conducteur, par exemple par l'allumage d'un voyant lumineux.

**Revendications**

**1.** Procédé de diagnostic (44) d'un piège à oxydes d'azote (10) logé dans un dispositif de traitement (7) des émissions polluantes d'un moteur (1), ledit dispositif logeant un système anti-pollution additionnel (11) en aval du piège (10), ledit piège (10) étant apte à décomposer, pendant une phase de régénération, les oxydes d'azote stockés dans le piège (10) par réaction avec des réducteurs, ledit procédé (44) comprenant :

- une étape de détermination (48) d'un critère de diagnostic (C) dépendant de la masse de réducteurs ($M_{red}$) consommée pendant la phase de régénération ;
- une étape (49) de comparaison du critère de diagnostic (C) à un seuil de défaillance (S) en dessous duquel on détermine que le piège (10) est défaillant ; et
- une étape (50) d'émission d'un signal indiquant l'état de défaillance du piège (10),
**CARACTERISE EN CE QU'**
on détermine le critère de diagnostic (C) comme étant égal au produit :
- de la masse de réducteurs ($M_{red}$) consommée pendant la phase de régénération, calculée comme l'intégrale temporelle, pendant la durée de la phase de régénération ($\Delta t$), de la différence entre un débit massique de réducteurs en amont ($Q_{am}$) du dispositif (7) et un débit massique de réducteurs en aval ($Q_{av}$) du dispositif (7) ;
- de l'efficacité de réduction ($\varepsilon_{red}$) du piège (10) pendant la phase de régénération dépendant de la température ($\theta$) du piège (10) pendant la phase de régénération ; et,
- d'une fonction (f) de la durée ($\Delta t$) de la phase de régénération, selon l'équation :

$$(Eq.6) \qquad f(\Delta t) = \min(T_{min},\Delta t) \, / \, \max(T_{max},\Delta t)$$

, équation dans laquelle

- $\min(T_{min},\Delta t)$ désigne la plus petite valeur parmi une durée minimale prédéterminée ($T_{min}$), égale au temps de transvasement du système anti-pollution additionnel (11) par les gaz d'échappement du moteur (1), et la durée de régénération ($\Delta t$) ;
- $\max(T_{max},\Delta t)$ désigne la plus grande valeur parmi une durée maximale prédéterminée ($T_{max}$) et la durée de régénération ($\Delta t$).

**Patentansprüche**

**1.** Verfahren zur Diagnose (44) einer Stickoxidfalle (10), die in einer Vorrichtung (7) zur Behandlung der Schadstoffemissionen eines Motors (1) untergebracht ist, wobei die Vorrichtung ein zusätzliches Emissionsminderungssystem (11) stromabwärts der Falle (10) unterbringt, wobei die Falle (10) während einer Regenerationsphase die Stickoxide, die in der Falle (10) gespeichert sind, durch Reaktion mit Reduktionsmitteln zersetzen kann, wobei das Verfahren (44) Folgendes umfasst:

- einen Schritt des Bestimmens (48) eines Diagnosekriteriums (C), das von der Masse von Reduktionsmitteln ($M_{red}$), die während der Regenerationsphase verbraucht wird, abhängt;
- einen Schritt (49) des Vergleichens des Diagnosekriteriums (C) mit einem Versagensschwellenwert (S), unter dem man bestimmt, dass die Falle (10) versagt, und
- einen Schritt (50) des Abgebens eines Signals, das den Versagenszustand der Falle (10) anzeigt,

**dadurch gekennzeichnet, dass**
man das Diagnosekriterium (C) als gleich dem folgenden Produkt:

- aus der Masse von Reduktionsmitteln ($M_{red}$) die während der Regenerationsphase verbraucht wird, die als das zeitliche Integral während der Dauer der Regenerationsphase ($\Delta t$), der Differenz zwischen einem Massenstrom von Reduktionsmitteln stromaufwärts ($Q_{am}$) der Vorrichtung (7) und einem Massenstrom von Reduktionsmitteln stromabwärts ($Q_{av}$) der Vorrichtung (7) berechnet wird;
- der Reduktionseffizienz ($\varepsilon_{red}$) der Falle (10) während der Regenerationsphase, die von der Temperatur ($\theta$) der Falle (10) während der Regenerationsphase abhängt, und
- einer Funktion (f) der Dauer ($\Delta t$) der Regenerationsphase, gemäß der Gleichung:

$$(Gl.\ 6) \qquad F(\Delta t) = \min(T_{min}, \Delta t) / \max(T_{max}, \Delta t)$$

bestimmt,
wobei in der Gleichung
- min ($T_{min}, \Delta t$) den kleinsten Wert aus einer vorbestimmten Mindestdauer ($T_{min}$), die gleich der Transferzeit des zusätzlichen Emissionsminderungssystems (11) durch die Abgase des Motors (1) ist, und der Regenerationsdauer ($\Delta t$) bezeichnet;
- max($T_{max}, \Delta t$) den größten Wert aus einer vorbestimmten maximalen Dauer ($T_{max}$) und der Regenerationsdauer ($\Delta t$) bezeichnet.

## Claims

1. Diagnostics method (44) for diagnosing a nitrogen oxides trap (10) housed in a treatment device (7) that treats the pollutant emissions of an engine (1), downstream of the trap (10), said trap (10) being said device housing an additional anti-pollution system (11) downstream of the trap (10), said trap (10) being able, during a regeneration phase, to break down the nitrogen oxides stored in the trap (10) by reaction with reducing agents, said method (44) comprising:

   - a step (48) of determining a diagnostics criterion (C) dependent on the mass of reducing agents ($M_{red}$) consumed during the regeneration phase;
   - a step (49) of comparing the diagnostics criterion (C) with a defectiveness threshold (S) below which it is determined that the trap (10) is defective; and
   - a step (50) of emitting a signal indicating the state of defectiveness of the trap (10),

   **CHARACTERIZED IN THAT**
   the diagnostics criterion (C) is determined as being equal to the product:

   - of the mass of reducing agents ($M_{red}$) consumed during the regeneration phase, calculated as the integral, with respect to time, for the duration of the regeneration phase ($\Delta t$), of the difference between a mass flow rate ($Q_{us}$) of reducing agents upstream of the device (7) and a mass flow rate ($Q_{ds}$) of reducing agents downstream of the device (7);
   - of the reduction efficiency ($\varepsilon_{red}$) of the trap (10) during the regeneration phase, dependent on the temperature ($\theta$) of the trap (10) during the regeneration phase; and
   - of a function (f) of the duration ($\Delta t$) of the regeneration phase, according to the equation:

   $$(Eq.6) \quad f(\Delta t) = \min(T_{min}, \Delta t) / \max(T_{max}, \Delta t)$$

   in which equation
   - min($T_{min}, \Delta t$) denotes the smallest value out of a predetermined minimum duration ($T_{min}$), equal to the time taken for the exhaust gases from the engine (1) to transfer through the additional anti-pollution system (11), and the regeneration duration ($\Delta t$);

- max($T_{max}$,$\Delta t$) denotes the largest value out of a predetermined maximum duration ($T_{max}$) and the regeneration duration ($\Delta t$).

**Fig. 1**

**Fig. 2**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2916017 A1
- FR 2940356 A1